Europäisches Patentamt

European Patent Office

Office européen des brevets

(11) Publication number: **0 051 886**
A1

## EUROPEAN PATENT APPLICATION

(21) Application number: 81201169.0

(22) Date of filing: 22.10.81

(51) Int. Cl.³: **G 03 B 27/72**, G 03 G 15/04, H 04 N 1/036

(30) Priority: 10.11.80 GB 8036007

(43) Date of publication of application: 19.05.82
Bulletin 82/20

(84) Designated Contracting States: **BE DE FR GB NL**

(71) Applicant: **AGFA-GEVAERT naamloze vennootschap,** Septestraat 27, B-2510 Mortsel (BE)

(72) Inventor: **De Cock, Etienne Marie, Calvarieberg 11,** B-9160 Hamme (BE)

(54) Recording system.

(57) A non-scanning recording system (10) for recording information over the width of a movable photoreceptor (12) makes use of small point light sources, which are provided on a monocrystalline substrate (11). Due to the manufacturing step of said point light sources, their length amounts to fractions of the width of a conventionally sized photoreceptor. The recording system according to the invention is based on the use of groups of such point light sources, which are arranged in staggered relation and combined with focussing systems such as autofocussing optical fibers or lenticular screens (15, 16).

Recording system

This invention relates to recording systems for linearly recording information upon a photoreceptor over the width thereof, which does not employ a scanning technique.

One presently known class of recording systems for line recording information uses a scanning technique in which a light beam is intensity-modulated and performs sweeps in succession over the width of an information recording material in order to record the information and to form an image after subjecting the information recording material to a chemical or physical process rendering the information visible. Recording systems of the scanning type are rather complex in that a number of precautionary measures are to be taken to guarantee that a reproducible and fault-free record can be carried out.

Typical effects that have to be compensated for are a.o. the variable speed of the sweep over the width of the recording material, giving rise to an unequal light distribution, the difficulty in carrying out an exact register of the extremities of each line, etc.

A non-scanning line-recording system used in electrography utilizes an array of discrete, individually energizable electrodes for depositing electrostatic charges upon a charge-retaining surface or selectively discharging a said charged charge-retaining surface. Apart from the fact that a dielectric layer has to be provided on the surface of the recording material, such systems are characterized by a poor resolution.

In published German Patent Application no. 2,812,206, filed March 20, 1978 by Philips Patentverwaltung G.m.b.H., a non-scanning recording system is disclosed which makes use of so-called light valves to carry out a non-scanning line recording. Light valves are solid state components which are capable to produce a modulated light beam either in an active or passive way. Unfortunately the manufacture of such elements is based on a series of operations carried out on mono-crystalline substrates, which give rise to the fact that the dimensions of such elements are rather small when compared with, say the width of a sheet of recording paper. Furhtermore forming a continuous line of information by adjacently placing small rows of light valve systems is not possible due to the fact that the formation of light valve components cannot be extended to the upmost extremities GV 1125 of the monocrystalline substrate. As a consequence recording systems based on light valve systems have hitherto only been suitable for recording continuous lines of very small width.

While it might be conceived possible with the help of magnifying optics that the discrete small lines of information could be converted into one line, in so doing part of the resolution of the system becomes lost, and further the adjustment of the optical elements, which have to be identical, is a very critical and complicated step.

In published British Patent Application 2,042,746 filed December 31, 1979 by Savin Corporation, a "multiple variable light source photographic printer" is described wherein use is made of an exposure device containing a pair of rows of semiconductor chips on which a plurality of light-emitting diodes (LED's) are disposed the said chips in each row being spaced and staggered with respect to the chips of the other row so that the chips of one row overlap the chips of the other row by an axial distance which accounts for the inactive chip areas at the end of the chips. In this way the effect of a continuous line across the surface of a photoreceptor can be provided by delaying the signals associated with the one row of LED's with respect to the other row or by providing a plurality of light pipes associated with the LED's, one end of the light-pipes being oriented adjacent each respective LED and the other end adjacent the photoreceptor surface.

As each LED has an associated light pipe for guiding the light to the photoreceptor surface the number of light pipes is quite high in the order of a some thousands of which the ends adjacent the photoreceptor are all brought together in one line. This is quite inconvenient and hardly usable in practice the more because the spacing between the fiber ends and the photoreceptor must be so small that dust contamination of the fiber ends occurs and in the case of a xerographic drum as photoreceptor, difficulties may be encountered by the eccentricity of the drum.

It is an object of the present invention to provide a recording system based on groups of addressable and energizable point light sources, particularly active or passive light intensity controlling elements whereby information may be recorded substantially linearly over the width of common size movable photoreceptors constituting the GV 1125 photosensitive recording material, thereby avoiding the inconveniences and disadvantages of prior art systems referred to.

According to the invention there is provided a recording system for linearly recording information upon a movable photoreceptor comprising a plurality of groups of linearly arranged addressable and energizable point light sources extending over said movable photoreceptor and disposed in at least two adjacent rows wherein groups of light sources in one row are disposed in staggered relationship to groups of light sources in the adjacent row, signal generating means for generating signals representative of information to be recorded, and signal application means to selectively address said signals to light sources in said groups and to energize them accordingly whereby said photoreceptor is information-wise exposed to a light pattern, the said plurality of groups of light sources being characterised in that an optical transfer system is provided focussing a light pattern produced by the light sources of each row of said two adjacent rows onto the surface of said movable photoreceptor to together form a substantially continuous line of exposure thereon.

The groups of linearly arranged point light sources used in the system according to the invention may be in the form of a line of light sources mounted on a substrate which are commercially available.

The addressable and energizable point light sources used in the system of the invention may be in the form of active or passive electro-optical or magneto-optical elements. Active electro-optical elements, as light-emitting diodes or plasma-elements or high-resolution cathode ray tubes, emit light when actuated by an electric signal.

Passive electro-optical elements are of the light-valve type i.e. their light transmission or light reflection characteristics are modified under the influence of an actuating electric signal. Examples of passive electro-optical elements that may be used are liquid crystal elements, PLZT devices, etc. Magneto-optical elements of the light valve type behave in a substantially analogous fashion to the electro-optical devices in that their light transmittance can be modified by the simultaneous application of short duration heat and magnetic field pulses causing a Faraday-rotation in the interior of the element that, when seen through crossed polarizers is translated in a change of the light transmission characteristics. The elements can GV 1125 be switched back into their original optical state by the simultaneous application of a heat pulse and a magnetic pulse of a polarity opposite to that used during the "opening" step.

When elements of the light-valve type are used, care must be taken that the light is uniformly distributed along the groups of elements. Therefore in a preferred embodiment of the invention, light is supplied through optical fibers arranged in so-called fish tail optics. In so doing a light source of the bulb-type may be used, if desired in combination with a supplementary reflector, which projects a uniform beam of light on the bundle of fibers, the light itself being distributed in the line to which the light valve elements are optically coupled. By such means the use of a tube-type light source extending over the row or rows of light valve elements is avoided and the inconvenience of uneven light distribution, which is a characteristic thereof, is eliminated.

Due to the very small dimensions of the point-like light sources the associated optical transfer system which focusses the information containing light distribution on a line of the photoreceptor may be kept small so that the recording system can readily be incorporated in a common xerographic copying apparatus, if desired. Optical transfer systems which are advantageously used in combination with said light sources comprise at least one row of auto-focussing optical fibers, lenticular screens or analogous devices.

Widely used optical focussing elements, for example lenses, are however not excluded.

When a recording system according to the invention is built-in or combined with a common copying apparatus, a further row of auto-focussing optical fibers or lenticular screens may be used for the normal copying processes.

When only one row of auto-focussing optical fibers or lenticular screens are used, the use of an associated set of mirrors or semi-transparent mirrors is required.

The generation of signals for the individually addressable and energizable point-like light sources may be controlled by a simple mechanism and associated electronic circuit which guarantees that the recorded lines of information are rigorously equispatially arranged relative to each other. This may be effected by means of a detecting GV 1125 system which monitors the position of the moving photo-receptor and which generates a signal that controls the discharge of a buffer station. The buffer station is connected to a shift register in which the incoming signals are stored. The arrival of the incoming signals is controlled by a clock and hence is a function of time. As, however, the speed at which the photoreceptor is moving may be subjected to variations as a function of time, a time-controlled application of the signals might lead to an uneven spacing between the recorded lines. Therefore, the emptying of the buffer-station is controlled by a position detector so that uneven spacing is completely avoided. As a consequence, speed fluctuations of the photoconductor due to phenomena comparable to "wow" or "flutter" of tape recorders are avoided. Also mechanical faults such as the eccentricity of xerographic drums are compensated in this way.

The invention also includes recording systems in which the formation of the continuous line image over the width of the photoreceptor does not occur simultaneously.

So, such recording systems may be divided in two or more sub-systems, having a central control system for controlling the time-dependent or time-delayed energizing of the point light sources of each sub-system so that recording of the information generated by each sub-system occurs in register.

A first recording system according to the invention has, for example, its point like sources energized at a given moment, while the electric signals necessary for energizing a second recording system are temporarily stored in a memory during a certain time delay. After this time delay the stored signals are applied to said second recording system at the moment the line containing only a part of the information to be recorded or information which must be updated, passes the focus line of the second recording system. The moment at which the memory is emptied may be controlled by means of an optical disc which defines a time delay by means of a pulse counter counting a predetermined number of electric pulses generated with the help of the light source and associated photocell. The foregoing step, namely the time delayed recording of information, may also be applied when the focus line of the focussing systems of each row are spaced from each other. So, the feeding of electric signals to the first GV 1125 and second groups of point like light sources is done via a delay line and a memory so that the continuous light pattern over the width of the photoreceptor is formed in a non-simultaneous manner.

Particular embodiments of the recording system according to the invention are hereinafter described with reference to the accompanying figures in which :

Fig. 1 is a sideview of the recording system according to the invention using active electro-optical elements;

Fig. 2 is a top view of the recording system of Fig. 1 using passive electro-optical or magneto-optical elements;

Fig. 3 is a detail of the recording system of Fig. 2;

Figs. 4A and 4B are other embodiments of the recording system of Figs. 1 to 3;

Fig. 5 shows how the recording system of Figs. 1 and 2 may be incorporated in a xerographic copying apparatus;

Fig. 6 shows the block diagram of the control system for recording equispatially arranged lines of information and

Fig. 7 shows another recording system according to the invention.

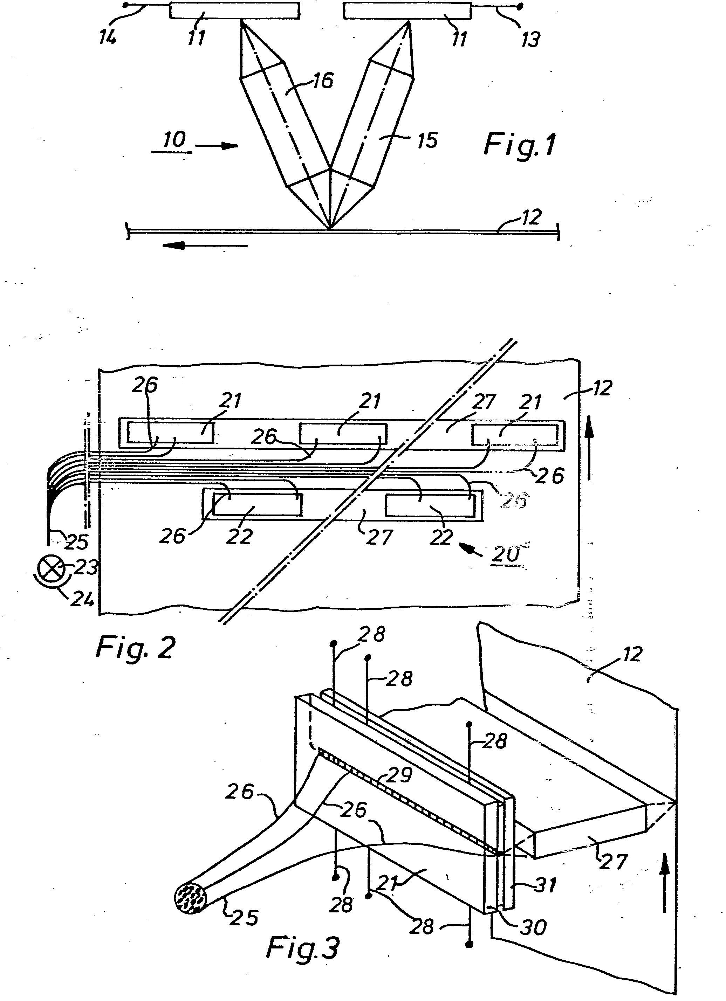

In Fig. 1 a sideview of a recording system 10 according to the invention is shown. The recording system 10 comprises two rows of active electro-optical elements 11 that are oriented in transverse direction (i.e. across the width) over a photosensitive element 12. The photosensitive element 12 may be in the form of a sheet or web (as illustrated) or generally, be an element the surface of which undergoing modifications of chemical or physical nature upon exposure to light of a predetermined wavelength or range of wavelengths. A charged xerographic drum or belt may also be used as photosensitive element. In order to bring about a focussing of the light emitted by the active electro optical elements 11, as a consequence of the application of an electric signal via electrodes 13, 14, optical transfer means 15, resp. 16 are provided. The optical transfer means 15, resp. 16 may be in the form of auto-focussing optical fibers or of lenticular screens in order to save place and to simplify their adjustment. Auto-focussing optical fibers are wel-known in the art and combine imaging properties with low light loss. Lenticular screen devices are disclosed for example in USP 3,853,395 of George J.Yevick, issued December 10, 1974.

GV 1125

The active electro-optical elements, arranged in at least two rows may be light-emitting diodes or plasma elements. They emit light of a well defined range of wavelengths upon energizing by a source of an electric voltage of adequate magnitude and polarity. The spectral sensitivity of the photosensitive element 12 must correspond with or is adapted to the spectrum emitted by the electro optical elements.

Fig. 2 shows a recording system 20 which is substantially similar in principle to the one illustrated in Fig. 1 but in which use is made of light-valves i.e. passive electro-optical or magneto-optical elements 21 and 22. Passive electro-optical or magneto-optical elements do not emit light upon the application of an electric voltage thereat but change their optical characteristics. As such they are capable to serve as light-switching elements.

Light-valves are commonly supported on a monocrystalline substrate usually a few centimetres long, which is not sufficient for covering the width of a conventially sized receptor material. Further, due to their chip-like structure the line of light-valve components in each element is smaller than the length of the individual substrate, so that from a single row of substrates, a continuous image line cannot be formed. A central feature of the recording systems according to the invention resides in the staggered configuration of adjacent groups. In particular when the groups are disposed in parallel rows, the groups are staggered in adjacent rows, so that the extreme light sources in each group extend spatially to an extremity of the nearest staggered group in an adjacent row. In the embodiments illustrated only two adjacent rows of elements are shown, in the interests of clarity. In practice more than two rows may be used.

As seen in fig. 2 the mutual longitudinal distance between the light-valve elements 21 and 22 corresponds to the length of one element. Of course, the chip-like structure of each light-valve element 21 or 22 is longer than the line of light-valve components in each element as, in addition the chip carries other components of electronic nature which are all equally enclosed in a suitable housing.

Passive electro-optical or magneto-optical elements require an additional light source which must show a uniform light distribution along its longitudinal axis so that the light received at the edges GV 1125 of the photosensitive material 12 is the same as in the middle thereof.

With common tube-like light sources that comprise a longitudinally extending filament enclosed in a glass tube, such uniform light distribution is not brought about and the said unwanted characteristic can only be avoided by means of optical appliances which make the exposure system rather complicated and/or costly.

Hence, the recording system 20 comprises a bulk-like light source 23 in order to obtain the required uniform light distribution, said light source being provided if desired with a reflector 24 that exposes a bundle of optical fibers 25 of the fish-tail type.

Fish-tail type optical fibers are in the form of a bundle of optical fibers, one end of which has a plane cross-section, wheeas the other extremity fanning out into separated lines leading to the line of light-valve components. In such an arrangement a uniform light distribution over each group of light sources may be obtained from a single uniformly radiating light bulb 23.

By providing such a row of optical fibers 26 in close proximity of the light-valve elements 21 or 22, the latter become uniformly exposed and as a consequence the information obtained by exposure of the photoreceptor 12 will have the same contrast all over its width. In Fig. 2 is also illustrated how the auto-focussing optical fibers or lenticular screens 27 are located unde the light-valve elements 21 and 22. As may also be derived, the mutual distance between the light-valve elements 21 corresponds to the length of ligh-valve elements 22 and vice versa, so that, after focussing of the transmitted light one continuous line of light may be realized over the width of the photoconductor 12.

Fig. 3 shows in better detail the optical configuration between the several components of the recording system according to the invention when use is made of light-valves of the magneto-optical type. The light-valve element 21 comprising a plurality of light-valve components 29 arranged in an array is uniformly illuminated by means of optical fibers 26 the separated ends of which are connected to the light-valve components 29, and the other ends are arranged in a close packed bundle which is illustrated by a uniformly radiating light source (not shown).

GV 1125

The line of light-valve components 29 is provided between two polarizers 30 and 31 and each component 29 is individually addressable via electrodes 28. The energizing of the light-valve components 29 may be done either directly or with the help of so-called multiplex techniques.

The orientation of the optical planes of the polarizers 30 and 31 does not coincide but differ by about 60 degrees.

When a light-valve component 29 is brought to active (or light transmitting) state a magnetic field is created causing the Faraday-vector to be gradually twisted so that it coincides with the orientation of polarizer 30 at its edge facing the same and with the orientation of polarizer 31 at its edge facing the latter.

As a consequence the light coming out of the optical fibers 26 is polarized according to the optical plane of polarizer 30 but is gradually rotated in such a sense that it coincides with the optical plane of polarizer 31, thereby passing through the light-valve component 29. By means of the auto-focussing optical fibers 27 light is focussed on the surface of photosensitive material 12, and recording takes place. The light-valve component 29 is brought in inactive state by again reversing the magnetic field by e.g. an electric signal of a polarity opposite to the one used for initiating the recording step.

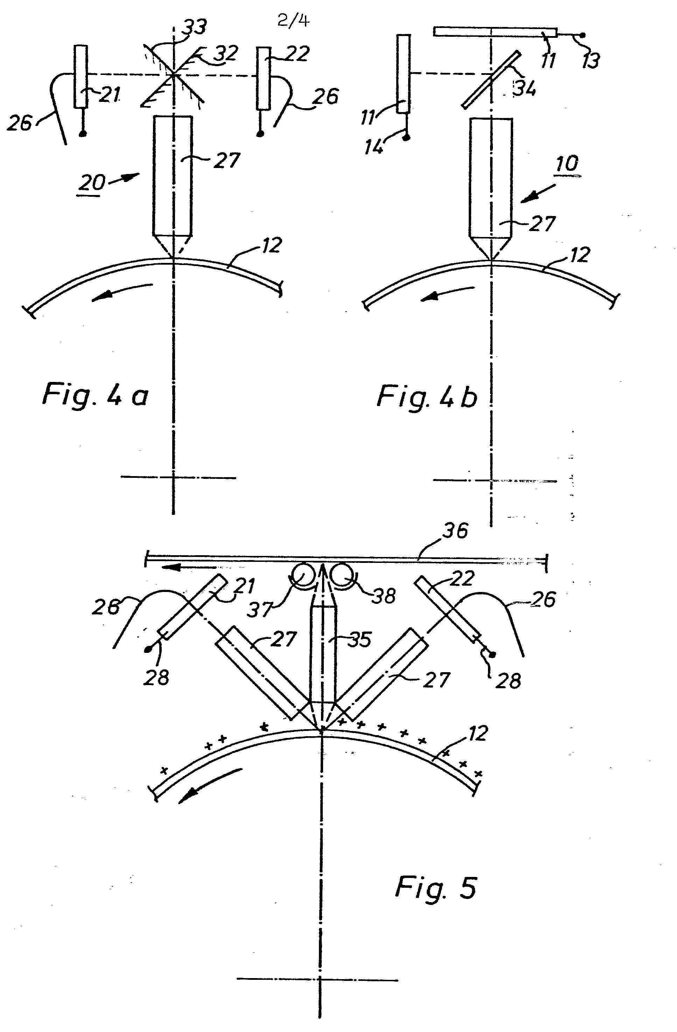

In Figs. 4a and 4b it is illustrated how the use of two focussing systems can be omitted in a recording system 10 or 20 according to the invention.

Fig. 4a shows one possibility in case elements of the light-valve type 21 and 22 are used. The light transmitted by the said elements when taking the transmitting position is reflected by mirrors sections 32, resp. 33 which are axially aligned with respect to each other but which (in the case as illustrated) are located normal to each other. The width of the mirrors sections, covering the area of the length of the auto-focussing optical fibers or lenticular screen 27, has to be equal to that of the light-valve elements 21 and 22 in order to built up a continuous line over the width of the photosensitive element 12 (here in the form of a xerographic drum or belt).-

Another possibility is illustrated in Fig. 4b for the case of active electro-optical elements 11. Here, use is made of a semi-

GV 1125

0051886

transparent mirror 34 which reflects or transmits light emitted by the active electro-optical elements 11, towards the auto-focussing optical fibers or lenticular screen 27.

When using a semi-transparent mirror 34, same extends over the width of the photosensitive element 12, and as a consequence, its adjustment is facilitated. On the other hand, a loss of light energy occurs which must be compensated for.

It will be clear that the recording systems of Fig. 4a and 4b are only illustrative and that other mirrors or semi-transparent mirror configurations may be conceived enabling the use of only one focussing means.

In Fig. 5 it is shown how a recording system according to the invention may be incorporated into a xerographic copying apparatus from which only the charged xerographic drum or belt 12 is illustrated.

In addition to the components already referred to in the foregoing description and figures, a supplementary row of autofocussing optical fibers or lenticular screens 35 is provided. The focussing elements are focussed on the surface of the xerographic drum 12 and on an original 36 which advances in a plane defined by the focus line (as in usual copying apparatus). Two separate light sources 37 and 38 illuminate the area of the original 36 to be copied. The original 36 reflects light which is collected by the focussing elements 35 and transmitted to the surface of xerographic drum 12 where an information-wise charge distribution is built up. The original 36 and the surface of xerographic drum 12 move synchronously, and the charge distribution is further treated in known way in order to render the recorded image visible and to fix it. As the further treatments of electrostatic charge images is sufficiently known in the art, they are not illustrated.

In Fig. 5, it is shown that the focus lines of focussing elements 27 and 35 coincide with each other. As the information is already recorded in the form of continuous lines by focussing elements 35, it must not necessarily coincide with the line fractions produced by the active or passive elements 21 and 22. The recording system according to the invention may be provided for somewhere else in the copying apparatus.

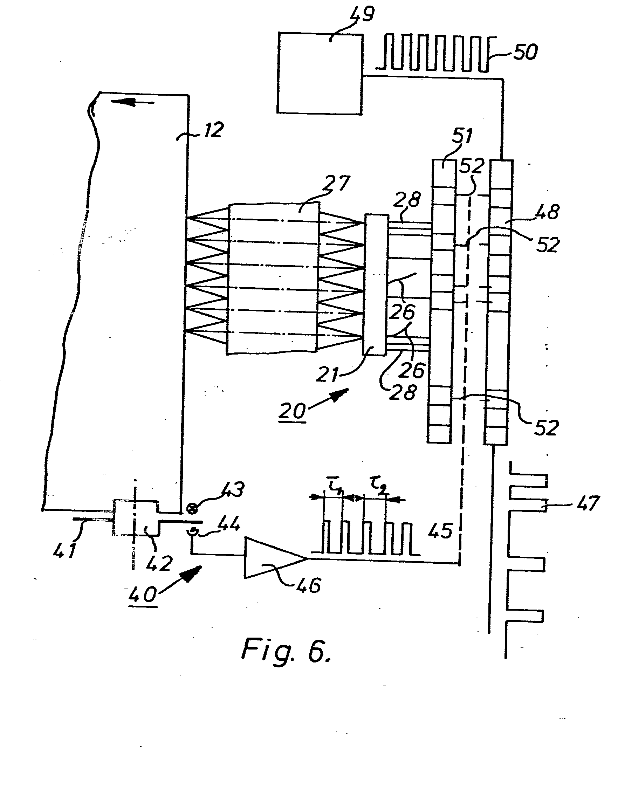

Fig. 6 illustrates how a digital signal may be recorded on a pho-GV 1125 tosensitive material and shows more particularly a control circuit for ensuring that the lines of information are equispatially recorded relative to each other.

Such a control system is highly desirable in that an unwanted non-regular spacing between the recorded lines may be compensated. Said irregular spacing would result from irregularities in the drive system for the photosensitive material or from a small eccentricity during the manufacturing step of e.g. a xerographic drum.

Fig. 6 shows the system in case a xerographic drum 12 is used as a photosensitive material. In a recording system using a xerographic drum, the two irregularities mentioned hereinbefore may occur simultaneously.

The control system 40 governing the correct spacing of recorded information on xerographic drum 12 by means of recording system 20 comprises an optical disc 41 mounted on a drive wheel 42 contacting the surface of xerographic drum 12.

The optical disc 41 is in the form of a glass platen in circular form carrying in its peripheral zone a plurality of black and white patterns. A light source 43 directs light through the optical disc 41 and the transmitted light impinges on a photocell 44. Due to the black and white pattern on the optical disc 41 the light from light source 43 is optically chopped so that the output voltage of photocell 44 is in the form of a voltage pulse train 45 of a predetermined magnitude after appropriate amplification by amplifier 46.

As a function of time, the pulses constituting the pulse train 45 are not equally spaced (as is exaggeratedly illustrated by the periods $\tau_1$ and $\tau_2$ which would be equal to each other when an ideal drive mechanism for the xerographic drum 12 woul be used and when the latter would be perfectly circular).

Variations of the peripheral speed of the xerographic drum 12 are therefore translated into fluctuations of the period between adjacent pulses which are directly proportional to said variations of the peripheral speed.

On the other hand, the signal 47 to be recorded is a signal which is only time-controlled, that is to say, the voltage pulses are in the form of pulse trains of predetermined time duration.

A signal 47 to be recorded over the width of the xerographic drum GV 1125 12 shall contain as much pulses or discrete pulse trains as are necessary to fill a line transversally oriented over the said drum 12.
This is brought about by the co-operation between a shift register 48
and a clock 49 which generates a square wave voltage 50 of high frequency. Each time a pulse of signal 50 is applied to the shift register 48 the pulses constituting signal 47 move one position further
in it so that finally the information contents of shift register 48
corresponds to that of one information line on the xerographic drum
12.

In order to record a line, or in order to actuate the passive
electro-optical or magneto-optical elements 21 a series to parallel
conversion of the signal is necessary. This is carried out by means
of a buffer register 51 which is connected via electrodes 28 to the
electro-optical or magneto-optical elements 21. Between the shift
register 48 and the buffer register 51 a plurality of switches 52 is
provided which, upon closing, connect the individual cells of the
shift register 48 each with their corresponding ones in the buffer
register 51. The switches 52 are solid state switches having a short
switching time. The switches 52 are closed by the application of the
voltage pulses 45 generated by the photocell 44 and, as a consequence, are position-controlled instead of time-controlled. Due to this
fact all recorded lines are equispatially arranged relative to each
other. The solid state switches 52 may assume the form of a plurality of bipolar AND-gates linking the cells of the shift register 48 to
their corresponding cells in the buffer register 51, and one entry
electrode of the AND-gates being linked to one common supply line to
which the voltage pulse train 45 is applied.

During the moment that the active or passive electro-optical or
magneto-optical elements 21 are energized, the shift register is
filled with a new information signal intended for the next line to be
recorded.

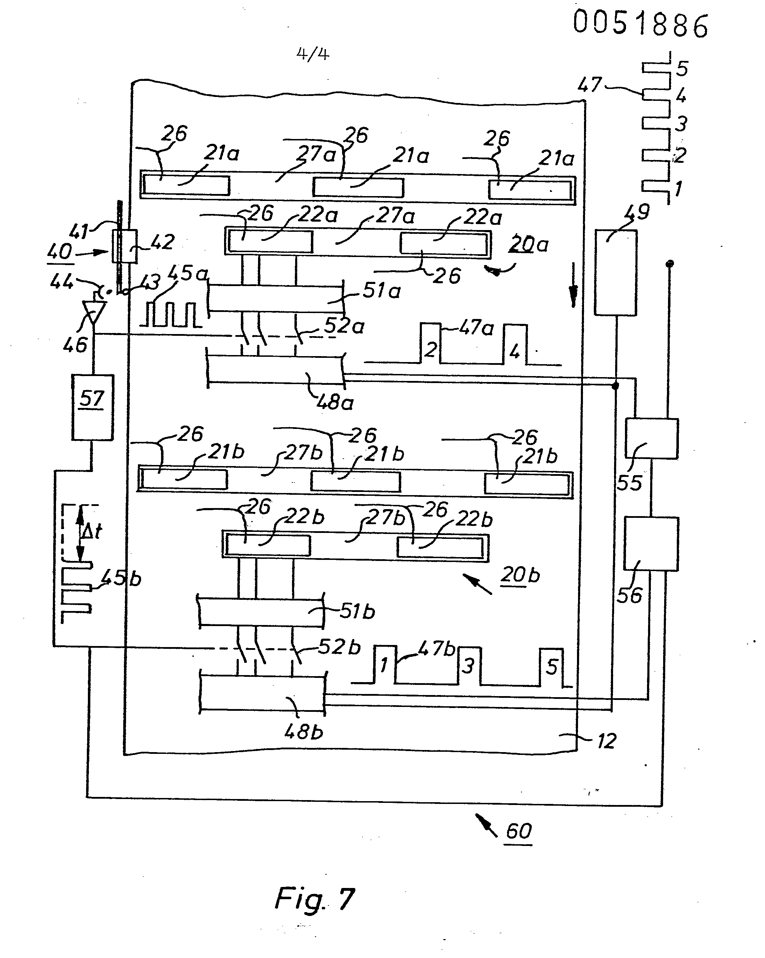

Fig. 7 illustrates a recording system 60 in which use is made of
two recording systems 20a and 20b according to the invention. The
two recording systems 20a and 20b have their analogous components denoted by the indexes a and b respectively and behave as the recording
system of the preceding figure 6. The purpose of the description of
this embodiment is to illustrate how e.g. one signal can be split and GV 1125 applied to two different recording systems or the way wherein two signals from e.g. different signal sources can be recorded in register.

In the following lines the case of a split signal will be treated. The signal 47 to be recorded comprises e.g. 5 electric pulses. This pulse train is split in splitter 55 into two separate sets of pulse trains, the pulse train 47a comprising the 2nd and the 4th pulses and the signal 47b consisting of the 1st, 3rd and 5th pulses. The pulse train 47a is processed as described with reference to the foregoing figure, whereas the pulse train 47b is temporarily stored in a memory 56.

The light source 43, associated photocell 44 and amplifier 46 produce a signal 45, which is applied as signal 45a to the solid state switches 52a of the recording system 20a in the manner as hereinbefore described. Simultaneously, the signal is applied to a delay line 57 from which it emerges after a certain time delay $\Delta t$ as signal 45b. Signal 45b is applied to the solid state switches 52b of the recording system 20b. The time delay $\Delta t$ corresponds with the moving of the line of information recorded by recording system 20a to the focus line of recording system 20b and the partial information produced by both recording systems wil be in register with each other.

The signal 45b serves to trigger the release of the stored signal 47b in memory 56 and in the same time to close solid state switches 52b for discharge of the shift register 48b. The net result produced by the time delay $\Delta t$ and the recording of the signal after that time delay, however, is the same as in a single system and the line of information produced by recording system 20b will be in register with the one produced by recording system 20a.

The system 60 described hereinbefore with reference to two separate recording systems 20a and 20b may also be applied to one recording system according to the invention. This might be of interest when the focus lines of the focussing system associated with each row of point-like light sources do not coincide with each other. Then the application of the electric signals to the point-like light sources may occur with a certain delay of time without loss of the linear aspect of the recorded information.

The scope of the invention also includes such systems.

GV 1125

WE CLAIM :

1. A recording system for linearly recording information upon a movable photoreceptor (12) comprising a plurality of groups of linearly arranged addressable and energizable point light sources extending over said movable photoreceptor and disposed in at least two adjacent rows (11), wherein groups of light sources in one row are disposed in staggered relationship to groups of light sources in the adjacent row, signal generating means for generating signals representative of information to be recorded, and signal application means to selectively address said signals to light sources in said groups and to energize them accordingly whereby said photoreceptor is information-wise exposed to a light pattern, characterized in that an optical transfer system (15,16) is prodived focussing a light pattern produced by the light sources of each row of said two adjacent rows onto the surface of said movable photoreceptor to together form a substantially continuous line of exposure thereon.

2. A recording system according to claim 1, wherein the said groups of point light sources each consist of a line of light sources mounted on a common substrate.

3. A recording system according to claim 1 or claim 2, wherein the said point light sources are active point light sources which emit light when actuated by an electrical signal or are light-valves consisting of electro-optical or magneto-optical elements.

4. A recording system according to claim 3, wherein said point light-sources are light-valves and each of the said groups of light-valves is uniformly irradiated by light transferred thereto by a plurality of optical fibres (26) associated with a common light source (23).

5. A recording system according to any of claims 1 to 4, in which the said optical transfer system is a row of auto-focussing optical fibers (27) or is a row of lenticular screen members associated with each row of point-like light sources and co-extending therewith.

6. A recording system according to any of claims 1 to 5, in which the said optical transfer system is formed by only one row of autofocussing optical fibers or a lenticular screen (27) and by mirror means (32,33,34) in which the image of each row of point-like light sources is focussed on said photoreceptor.

GV 1125

7. A recording system according to any of claims 1 to 6, further incorporating a supplementary focussing means (35) for projecting the image of an illuminated original directly upon the surface of said photoreceptor.

8. A recording system according to any of claims 1 to 7, further incorporating control means (40) to control the equispatial relation-ship between the lines of recorded information when variations of the speed at which said photoreceptor moves occur.

9. A recording system according to claim 8, in which said control means comprise a detector system for detecting the position of the moving photoreceptor thereby generating time-independent electric signals which trigger the means for generating signals representative for the information to be recorded.

10. A recording system according to claim 9, in which said time-independent signals are applied to switching means for the closing thereof and by which the information stored in a shift register (48) is transferred to a buffer register (51), the cells of which being connected to said point-like light sources.

11. A recording system according to claim 10, in which said switching means are bipolar AND-gates.

12. A recording system according to claims 8 to 11, comprising at least two sub-systems, having a central control system for controlling the time-dependent energizing of the point light sources of each sub-system so that recording of information produced by each subsystem occurs in register.

13. A recording system according to claims 8 to 11, in which the signals of said signal generating means are divided in at least two parts, the first part of said signals being applied to a first group of staggered point-like light sources and associated focussing system, the second part of said signals being applied to a second group of staggered point-like light sources and associated focussing system, said first and second group being spatially displaced relatively to each other along the trajectory of said photoreceptor and time-delaying means for controlling the moments at which the electric signals of the second group are generated so that the line of information recorded by said second group coincides with the line of information recorded by said first group.

GV 1125

0051886

14. A recording system according to claim 13, in which said time-delaying means (57) comprise a memory (56), the contents of said memory that is transferred to the shift register being associated with said second group after the delay in time determined by said time-delaying means.

1/4

0051886

Fig.1

Fig. 2

Fig.3

0051886

Fig. 4 a

Fig. 4 b

Fig. 5

Fig. 6.

Fig. 7

European Patent
Office

EUROPEAN SEARCH REPORT

## DOCUMENTS CONSIDERED TO BE RELEVANT

CLASSIFICATION OF THE
APPLICATION (Int. Cl. 3)

G 03 B 27/72
G 03 G 15/04
H 04 N 1/036

| Category | Citation of document with indication, where appropriate, of relevant passages | Relevant to claim |
|---|---|---|
| Y | US - A - 4 096 486 (J. PFEIFER et al.) <br><br> * the whole document * | 1-3, 12,13, 18,19 |
| Y | US - A - 4 107 687 (J. PFEIFER et al.) <br><br> * the whole document * | 1-3,9, 12,18 |
| A | IBM TECHNICAL DISCLOSURE BULLETIN, vol. 19, no. 7, December 1976, NEW YORK (US) W.D. CLARK: "Copier Printhead", page 2447 <br><br> * the whole article * | 1,2,4, 6 |
| A | GB - A - 2 042 746 (SAVIN CORP.) <br><br> * page 2, lines 8-57,66-78; page 3, lines 68,69; claims 1-3 * | 1-3,5, 8,12, 13 |
| A | IBM TECHNICAL DISCLOSURE BULLETIN, vol. 22, no. 12, May 1980, NEW YORK (US) J.D. CROW et al.: "Led fiber electrophotographic printer", pages 5499-5500 <br><br> * the whole article * | |
| A | US - A - 3 952 311 (J.M. LAPEYRE) <br><br> * column 3, lines 21-58; column 6, lines 1-69; figures 3,4 * | 1-3,8, 12 |

./..

TECHNICAL FIELDS
SEARCHED (Int.Cl. 3)

G 03 B 27/72
G 06 K 15/14
G 02 B 13/24
G 03 G 15/04

CATEGORY OF
CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search <br> The Hague | Date of completion of the search <br> 10.02.1982 | Examiner <br> GRASSELLI |

EPO Form 1503.1 06.78

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | DE - A - 2 856 540 (OLYMPUS OPTICAL Co.) <br><br> * page 11, line 17 to page 12, line 25; claim 1, figures 1,2 * <br> & US - A - 4 248 517 <br> --- | 1,8,11 | |
| A | US - A - 4 000 495 (W.W. PIRTLE) <br><br> * column 3, lines 16-30; column 5, lines 10-54; claims 1-3 * <br><br> ---------- | 1,8 | TECHNICAL FIELDS SEARCHED (Int. Cl.³) |